# EUROPEAN PATENT APPLICATION

(11) **EP 4 557 416 A2**
(43) Date of publication of application: **21.05.2025**
(21) Application number: 24186782.9
(22) Date of filing: 05.07.2024
(51) Int. Cl.: H01M 10/04, G06T 7/00

(54) **METHOD AND SYSTEM FOR DETECTING ABNORMAL TRANSPORT OF DEFECTIVE ELECTRODES**

(30) Priority: 14.11.2023 KR 20230157759
(71) Applicant: SAMSUNG SDI CO., LTD., Giheung-gu Yongin-si, Gyeonggi-do 17084 (KR)
(72) Inventor: LEE, Jonghoon, 17084 Yongin-Si (KR); HWANG, Sunuk, 17084 Yongin-Si (KR); LEE, Ha Kyu, 17084 Yongin-Si (KR); CHUNG, Hyunjong, 17084 Yongin-Si (KR)
(74) Representative: Marks & Clerk LLP

(57) **Abstract**

A method of detecting abnormal transport of a defective electrode plate, which is performed by at least one processor, the method including receiving a plurality of images associated with transport of a defective electrode plate from one or more cameras installed on a path of a secondary battery assembly process and detecting abnormal transport of the defective electrode plate on the path based on the images using a machine learning model based on unsupervised learning.

## Description

### BACKGROUND

### 1. Field

Embodiments of the present disclosure relate to a method and system for detecting abnormal transport of defective electrodes.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage).

Before stacking electrode plates (for example, positive or negative electrode plates) during a secondary battery manufacturing process, electrode plates determined to be defective are transported to a no good (NG) box by vacuum transport and then discharged. However, if the defective electrode plates drop in an incorrect position other than a normal transport path or are not discharged normally during transport of defective electrode plates, the defective electrode plates may collide with subsequently transported electrode plates, causing damage to the electrode plates or generating collision debris. Accordingly, there is a problem in that secondary battery products in which the corresponding electrode plates are used is adversely affected and the productivity of secondary batteries is reduced.

The above information disclosed in this Background section is for enhancement of understanding of the background of the present disclosure, and therefore, it may contain information that does not constitute related (or prior) art.

### SUMMARY

Embodiments include a method of detecting abnormal transport of a defective electrode plate, which is performed by at least one processor. The method includes receiving a plurality of images associated with transport of a defective electrode plate from one or more cameras installed on a path of a secondary battery assembly process and detecting abnormal transport of the defective electrode plate on the path based on the images using a machine learning model based on unsupervised learning.

The one or more cameras may be installed at a position adjacent to at least one of a no good (NG) box and an out belt on the path.

Detecting of abnormal transport of the defective electrode plate on the path may include detecting at least one of stacking of the defective electrode plate in the no good box, abnormal drop of the defective electrode plate in the no good box, an abnormal position of the defective electrode plate in the no good box and an abnormal position in the out belt, based on the plurality of images.

The one or more cameras may be connected to a power over Ethernet (POE) hub and the POE hub may be connected to at least one of an equipment control device associated with the secondary battery assembly process, a video recording device and a computing device associated with the machine learning model.

The machine learning model may be trained by an unsupervised learning method using a learning image frame set associated with normal transport of the defective electrode plate captured on the path of the secondary battery assembly process.

The machine learning model may be trained to receive an image and to output whether the image is included in a group generated based on the learning image frame set.

Detecting of the abnormal transport of the defective electrode plate on the path may include determining abnormal transport of the defective electrode plate for each of the images using the machine learning model and determining that the defective electrode plate is abnormally transported where a number of images determined to be abnormal transport of the defective electrode plate among the images exceeds a predetermined threshold.

The method may further include counting a number of normally discharged defective electrode plates based on the images.

Counting the number of normally discharged defective electrode plates may include counting the number of normally discharged defective electrode plates based on a number of image pixels corresponding to a defective electrode plate in regions of interest of the images.

The method may further include generating statistical data associated with transport of the defective electrode plate based on the number of normally discharged defective electrode plates.

The statistical data associated with the transport of the defective electrode plate may include data obtained by comparing a number of defective electrode plates determined by a vision inspector with the number of normally discharged defective electrode plates.

The method may further include counting a number of defective electrode plates detected to be abnormal transport based on the images.

Counting the number of defective electrode plates detected to be abnormal transport may include determining a type of abnormal transport of the defective electrode plate detected to be abnormal transport and counting the number of defective electrode plates for each type of the determined abnormal transport.

The method may further include generating statistical data associated with transport of the defective electrode plates, based on the number of defective electrode plates for each type of abnormal transport.

The statistical data associated with the transport of the defective electrode plates may include data obtained by comparing a number of defective electrode plates occurring on a path of another secondary battery assembly process with the number of defective electrode plates detected to be abnormal transport.

Embodiments include a non-transitory computer-readable recording medium storing instructions for execution by one or more processors that, when executed by the one or more processors, cause the one or more processors to perform the method.

Embodiments include a system for detecting abnormal transport of a defective electrode plate. The system includes one or more cameras configured to capture a plurality of images associated with transport of the defective electrode plate on a path of a secondary battery assembly process and a detection module configured to detect abnormal transport of the defective electrode plate on the path based on the images using a machine learning model based on unsupervised learning.

The one or more cameras may be installed at a position adjacent to at least one of a no good (NG) box and an out belt on the path.

The machine learning model may be trained by an unsupervised learning method using a learning image frame set associated with normal transport of the defective electrode plate captured on the path of the secondary battery assembly process.

The system may further include a counting module configured to count a number of abnormally transported defective electrode plates based on the images.

At least some of the above and other features of the invention are set out in the claims. These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a schematic view showing an example of a procedure in which an electrode plate is determined to be defective and is discharged to a no good (NG) box according to one or more embodiments of the present disclosure;
FIG. 2 illustrates a flowchart showing an example of a method of detecting abnormal transport of a defective electrode plate, according to one or more embodiments of the present disclosure;
FIG. 3 illustrates a schematic view showing an example of some operations of a method of detecting abnormal transport of a defective electrode plate according to one or more embodiments of the present disclosure;
FIG. 4 illustrates a schematic view showing an example in which hardware components for performing a method of detecting abnormal transport are connected to each other, according to one or more embodiments of the present disclosure;
FIG. 5 illustrates a block diagram showing an internal configuration of a processor according to one or more embodiments of the present disclosure;
FIG. 6 illustrates a diagram showing a machine learning model according to one or more embodiments of the present disclosure;
FIG. 7 illustrates an example in which a region of interest is set in an image, according to one or more embodiments of the present disclosure;
FIG. 8 illustrates examples of abnormal transport of detected electrode plates, according to one or more embodiments of the present disclosure;
FIG. 9 illustrates an example of a method of counting defective electrode plates, according to one or more embodiments of the present disclosure; and
FIG. 10 illustrates a flowchart showing an example of a method of detecting abnormal transport of a defective electrode plate, according to one or more embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of " 1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The term "module", "unit", or "portion" used in the specification refers to a software or hardware component, and the "module", "unit", or "portion" performs certain functions. However, the "module", "unit", or "portion" is not limited to software or hardware. The "module", "unit", or "portion" may also be configured to be included in an addressable storage medium and may also be configured to operate one or more processors. Accordingly, for example, the "module", "unit", or "portion" may include at least one component, such as software components, object-oriented software components, class components, or task components, processes, functions, properties, procedures, subroutines, segments of program code, drivers, firmware, microcode, circuits, data, databases, data structures, tables, arrays, and variables. The components and "modules", "units", or "portions" may be combined into smaller numbers of components and "modules", "units", or "portions" or may be further divided into additional components and "modules", "units", or "portions".

According to embodiments of the present disclosure, a "module" or "unit" may be implemented by a processor and memory. A "processor" should be interpreted broadly to include a general-purpose processor, a central processing unit (CPU), a microprocessor, a digital signal processor (DSP), a controller, a microcontroller, a state machine, and so on. In some environments, a "processor" may refer to an application-specific integrated circuit (ASIC), a programmable logic device (PLD), a field programmable gate array (FPGA), or so on. A "processor" may also refer to a combination of processing devices, for example, a combination of a DSP and a microprocessor, a combination of a plurality of microprocessors, a combination of one or more microprocessors combined with a DSP core, or any other combination of configurations. Furthermore, "memory" should be interpreted broadly to include any electronic component capable of storing electronic information. The "memory" may also refer to various types of processor-readable media, such as random access memory (RAM), read-only memory (ROM), non-volatile random access memory (NVRAM), programmable read-only memory (PROM), erasable-programmable read-only memory (EPROM), electrically erasable PROM (EEPROM), flash memory, a magnetic or optical data storage, a register, and so on. A memory is said to be in electronic communication with a processor as long as the processor may read information from and/or write information to the memory. The memory integrated to a processor is in electronic communication with the processor.

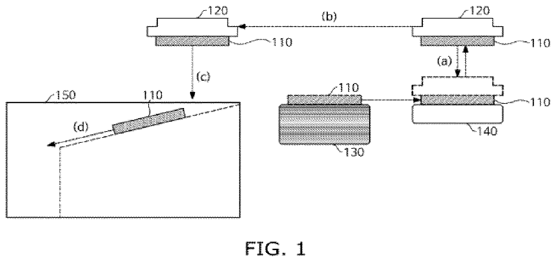

FIG. 1 illustrates a schematic view showing an example of a procedure in which an electrode plate 110 is determined to be defective and is discharged to a no good (NG) box 150 according to one or more embodiments. Referring to FIG. 1, the electrode plate 110 used in manufacturing a secondary battery may be moved to an inspection standby position on a transport belt 130. Thereafter, a vacuum transport 120 may move the electrode plate 110 onto a vision inspector 140 using, for example, a vacuum adsorption method. The vacuum transport 120 may be configured to be secured to the electrode plate 110 via suction to allow the electrode plate 110 to be lifted and moved. The vision inspector 140 may inspect whether the electrode plate 110 is defective by analyzing an image acquired by an optical sensor or an image sensor to determine whether the electrode plate 110 has partial loss, wrinkles, folds, or so on.

Referring to an operation (a), in which the electrode plate 110 is determined to be defective by the vision inspector 140, the vacuum transport 120 may pick up the defective electrode plate 110 using, for example, a vacuum adsorption method. Furthermore, referring to an operation (b), in order to destroy the defective electrode plate 110, the vacuum transport 120 may move the defective electrode plate 110 to a position on the NG box 150 while holding the defective electrode plate 110. The NG box 150 may be located in a direction opposite to the vision inspector 140 about the transport belt 130. The NG box 150 (otherwise known as a discard box or defect box) may be a box, space or region designated for receiving defective electrode plates 110.

Referring to an operation (c), the vacuum transport 120 may drop the defective electrode plate 110 into the NG box 150 by releasing vacuum adsorption. Furthermore, referring to an operation (d), the defective electrode plate 110 may be moved to a discharge port along an inclined surface (or a sliding plate) of the NG box 150. Accordingly, in a secondary battery manufacturing process, the defective electrode plate 110 may be moved to the NG box 150, collected, and destroyed.

This defective electrode plate 110 may be abnormally transported to a position other than a normal transport path, such as inside the NG box 150. For example, due to foreign matter on the inclined surface of the NG box 150, frictional force generated between the defective electrode plate 110 and the inclined surface of the NG box 150, the defective electrode plate 110 may be stacked on the inclined surface of the NG box 150 without being discharged. In another example, as the vacuum transport 120 releases the vacuum adsorption of the defective electrode plate 110 earlier than the scheduled time, the defective electrode plate 110 may be dropped in an inappropriate position, such as on at least a part of the transport belt 130 not the inside of the NG box 150. In this way, the abnormally transported defective electrode plate 110 may cause a secondary problem, such as collision with subsequent defective electrode plates or generation of collision debris, which may cause a decrease in productivity of secondary batteries.

Although the above embodiment describes that abnormal transport of the defective electrode plate 110 may occur around the NG box 150 illustrated in FIG. 1, the present disclosure is not limited thereto. For example, in a process of discharging a defective electrode plate through an out belt (not illustrated), abnormal transport of the defective electrode plate, such as piling up of the defective electrode plate without being discharged from the end of the out belt, may occur.

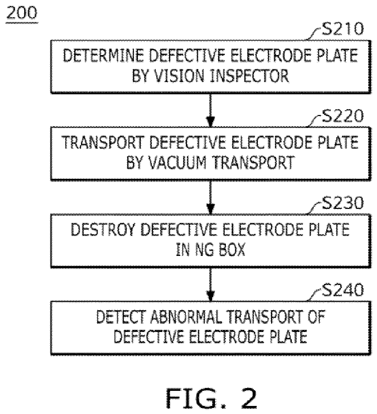

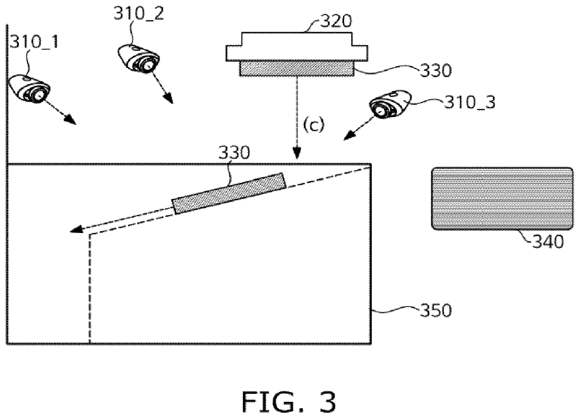

FIG. 2 illustrates a flowchart showing an example of a method 200 of detecting abnormal transport of a defective electrode plate, according to one or more embodiments of the present disclosure, and FIG. 3 is a schematic view showing an example of some operations of a method of detecting abnormal transport of a defective electrode plate according to one or more embodiments of the present disclosure.

As illustrated in FIG. 2, the method 200 of detecting abnormal transport of a defective electrode plate may begin by determining a defective electrode plate using a vision inspector (step S210). In one or more embodiments, referring to FIGS. 1 and 3, whether the electrode plate 330 is defective may be determined using a vision inspector.

Subsequently, the defective electrode plate may be transported by a vacuum transport (S220). The defective electrode plate may then be destroyed in an NG box (S230). In one or more embodiments, referring to FIG. 3, in which an electrode plate 330 is determined to be defective, the defective electrode plate 330 may be transported to the NG box 350 by a vacuum transport 320. Furthermore, the defective electrode plate 330 may be dropped into the NG box 350 and destroyed by the vacuum transport 320 moved to a certain position on the NG box 350.

In this manner, abnormal transport of the defective electrode plate may be detected (S240). In one or more embodiments, referring to FIG. 3, abnormal transport of the defective electrode plate 330 may be detected by one or more cameras 310_1 to 310_3. For example, one or more cameras 310_1 to 310_3 installed on a path of the secondary battery manufacturing process may capture a plurality of images associated with transporting of the defective electrode plate 330. For example, one or more cameras 310_1 to 310_3 may be installed adjacent to the NG box 350 on the transport path, and may capture at least a part of the NG box 350 and/or at least a part of a belt 340 or a region adjacent thereto.

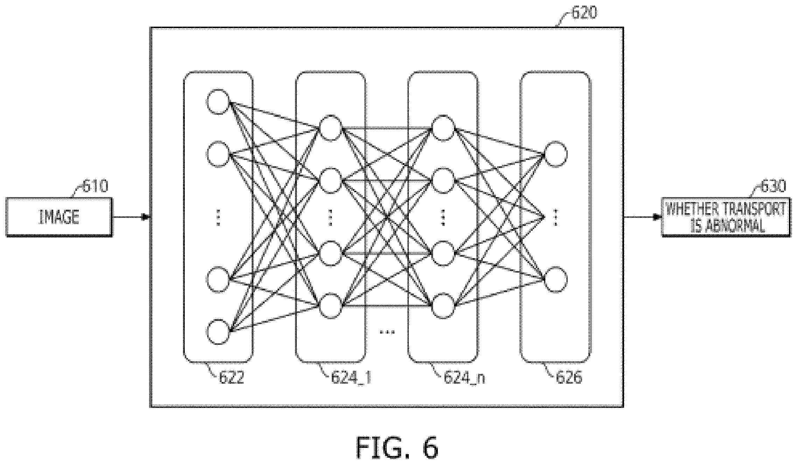

In one or more embodiments, abnormal transport of the defective electrode plate 330 occurring on the transport path may be detected based on a plurality of images captured by one or more cameras 310_1 to 310_3 using a machine learning model based on unsupervised learning. The machine learning model may be stored in and executed by one or more cameras 310_1 to 310_3 themselves (e.g. by one or more processors in the one or more cameras 310_1 to 310_3) or may be stored in and executed by a computing device or server connected to one or more cameras 310_1 to 310_3. Furthermore, the machine learning model may be learned by an unsupervised learning method using a learning image frame set associated with a normal transport of defective electrode plates taken on a path of a secondary battery assembly process. Accordingly, abnormal transport of the defective electrode plate 330 may be detected by analyzing or classifying whether a plurality of images captured by one or more cameras 310_1 to 310_3 are included in a group generated based on an image of a defective electrode plate that is normally discharged by the machine learning model. For example, abnormal stacking of the defective electrode plates 330 in the NG box 350, abnormal drop of the defective electrode plate 330 in the NG box 350, abnormal position or arrangement of the defective electrode plate 330 inside the NG box 350, and so on may be detected as abnormal transport of the defective electrode plate 330. An example of a method in which abnormal transport of a defective electrode plate is detected using a machine learning model will be described in detail below with reference to FIG. 6.

In one or more embodiments, in which abnormal transport of the defective electrode plate 330 is detected, a notification informing of the abnormal transport may be generated. The notification may be provided to a user or operator through an output interface (e.g., display) of an information processing system operated in conjunction with one or more cameras 310_1 to 310_3, an output interface connected to an equipment control device (e.g., a programmable logic controller (PLC)) associated with a secondary battery manufacturing process.

Although FIG. 3 illustrates that one or more cameras 310_1 to 310_3 may be installed in a position adjacent to the NG box 350 to capture an image of abnormal transport of a defective electrode plate, the present disclosure is not limited thereto. For example, a camera may also be installed adjacent to an out belt to capture an image of abnormal transport of a defective electrode plate that occurs at an end portion of the out belt.

Also, although FIG. 3 illustrates three cameras 310_1 to 310_3, the present disclosure is not limited thereto, and additional cameras may be installed or some cameras may be removed as needed to capture an image of a transport state of an electrode plate at various angles or at various resolutions.

As described above, abnormal transport of a defective electrode plate may be easily detected using a machine learning model to detect the abnormal transport of the defective electrode plate based on an image or video. Accordingly, by quickly processing abnormally transported defective electrode plates, secondary problems, such as a decrease in product quality due to abnormally transported defective electrode plates, may be prevented.

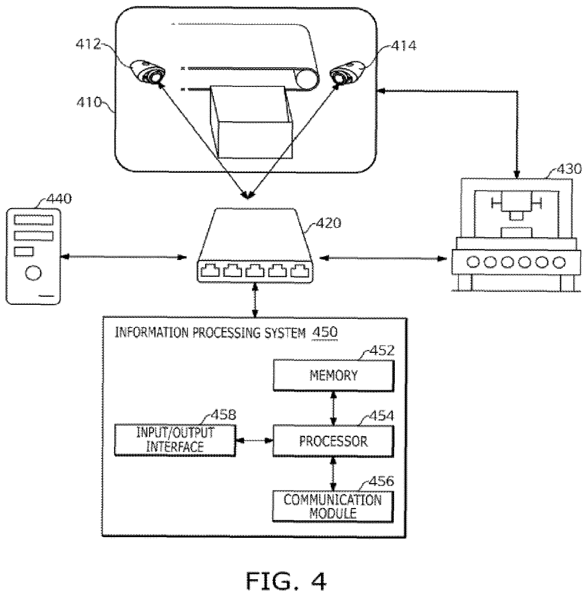

FIG. 4 illustrates a schematic view showing an example in which hardware components are connected to each other to perform a method of detecting abnormal transport, according to one or more embodiments of the present disclosure. In some embodiments, one or more cameras 412 and 414 may be installed on a path 410 of a secondary battery manufacturing process. For example, the one or more cameras 412 and 414 may be installed adjacent to an NG box and/or out belt where defective electrode plates are discharged. In some embodiments, the first camera 412 may be installed adjacent to an NG box that discharges defective positive electrode plates, and the second camera 414 may be installed adjacent to another NG box that discharges defective negative electrode plates. In other embodiments, the one or more cameras 412 and 414 may also or instead be installed around a corresponding NG box to capture an image of one NG box at various angles as shown in FIG. 4. The one or more cameras 412 and 414 may be installed using, for example, a bracket mount in a position that does not interfere with an operation of a driver of a manufacturing equipment and an electrode plate transport process.

In one or more embodiments, the one or more cameras 412 and 414 may be connected through a network (e.g., a local area network (LAN)) to a power over Ethernet (POE) hub 420 installed on the path 410 or in an external space of the manufacturing equipment. Furthermore, the POE hub 420 may be connected, for example, through a network to an equipment control device (PLC) 430 for controlling various manufacturing equipment on the path 410 in order to cooperate with an equipment associated with a secondary battery manufacturing process about inspection timing and determination results. The POE hub 420 may be connected, for example, to a network video recorder (NVR) 440 to store and manage images or videos received from the one or more cameras 412 and 414.

In one or more embodiments, the POE hub 420 may be connected to an information processing system (or a computing device) 450 that performs learning (e.g. training) of a machine learning model and detection of abnormal transport of a defective electrode plate. The information processing system 450 may include a memory 452, a processor 454, a communication module 456, and an input/output interface 458. An example of a configuration of the information processing system 450 will now be described in more detail.

The memory 452 may include any non-transitory computer-readable recording medium. According to one or more embodiments, the memory 452 may include a permanent mass storage device, such as read only memory (ROM), a disk drive, a solid state drive (SSD), or flash memory. In another example, the permanent mass storage device, such as ROM, an SSD, flash memory, or a disk drive may be included in the information processing system 450 that is a separate permanent storage device which is distinct from the memory. Furthermore, the memory 452 may store an operating system and at least one program code.

Such software components may be loaded from a computer-readable recording medium different from the memory 452. A recording medium readable by such a separate computer may include a recording medium that may be directly connected to the information processing system 450, for example, a recording medium that may be read by a computer, such as a floppy drive, a disk, a tape, a digital video disk (DVD)/compact disk (CD)-ROM drive, and a memory card. In another example, the software components may also be loaded into the memory 452 through the communication module 456 rather than a non-transitory computer-readable recording medium. For example, at least one program may be loaded into the memory 452 based on a computer program that is installed by files provided over a network by developers or a file distribution system that distributes installation files of applications.

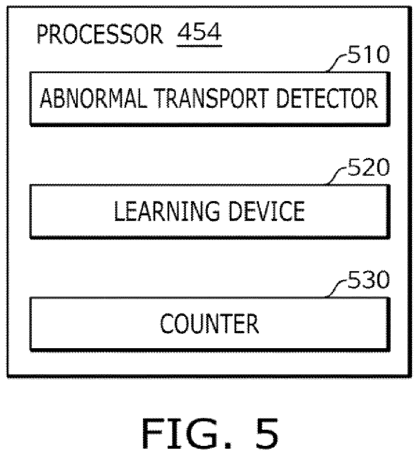

The processor 454 may be configured to process instructions of a computer program by performing basic arithmetic, logic, and input/output operations. Instructions may be provided to the processor 454 by the memory 452 or the communication module 456. For example, the processor 454 may be configured to execute the received instructions according to program codes stored in a recording device, such as the memory 452. Furthermore, the processor 454 may be configured to manage, process, and/or store information and/or data received from the POE hub 420 and/or a plurality of external systems. An example of the function and internal configuration of the processor 454 is described in detail below with reference to FIG. 5.

The communication module 456 may provide a configuration or function for the POE hub 420 and the information processing system 450 to communicate with each other through a network, and may provide a configuration or function for the information processing system 450 to communicate with another system (e.g., a separate cloud system or other system). For example, a plurality of images or videos received from the one or more cameras 412 and 414, images or videos stored in the video recording device 440, and so on may be transmitted to the information processing system 450 under control by the communication module 456 through the POE hub 420.

The input/output interface 458 of the information processing system 450 may be a device for interfacing with a device (not illustrated) for an input or output that is connected to the information processing system 450 or that the information processing system 450 may include. For example, an input device may include a keyboard, mouse, and so on, and an output device may include a display, a speaker, etc. Through the output device, a notification informing that abnormal transport of a defective electrode plate is detected may be provided. Although FIG. 4 illustrates that the input/output interface 458 is a device configured separately from the processor 454, the present disclosure is not limited thereto, and the input/output interface 458 may be included in the processor 454.

As described above, cameras may be installed in positions that do not interfere with an operation of a driver of a manufacturing equipment and an electrode plate transport process on the path 410, and accordingly, abnormal transport of a defective electrode plate that occurs on or around the path 410 may be detected without interfering with a manufacturing process. Furthermore, images and videos captured by cameras may be stored in and managed by, for example, the video recording device 440 or the information processing system 450, and thus, post-tracking and cause analysis of defective electrode plates determined to be transported abnormally may be easily performed.

FIG. 5 illustrates a block diagram showing an internal configuration of the processor 454 according to one or more embodiments of the present disclosure. Referring to FIG. 5, the processor 454 may include an abnormal transport detector 510, a learning device 520 and a counter 530.

The abnormal transport detector 510 may detect abnormal transport of a defective electrode plate based on a plurality of images received through a communication module (e.g., the communication module 456 in FIG. 4) or a plurality of images stored in a memory (e.g., the memory 452 in FIG. 4). For example, the abnormal transport detector 510 may determine whether a plurality of images are included in a group associated with normal transport of a defective electrode plate generated or classified by the learning device 520 using a machine learning model. That is, the abnormal transport detector 510 may classify each of the one or more images as either representing (e.g. showing) normal transport of a defective electrode plate, or representing (e.g. showing) abnormal transport of a defective electrode plate. The abnormal transport detector 510 may implement a machine learning classifier. The machine learning classifier may be configured to determine a probability of each classification based on the image. The classifications may include abnormal transport and normal (e.g. not abnormal) transport. The classifications may also include a type of abnormal transport (e.g. stacked plates, abnormal drop, abnormal position, etc.). The classification having the highest probability may be selected as the classification for the image. For example, if a specific image is not included in the group associated with the normal transport of the defective electrode plate, the abnormal transport detector 510 may determine that abnormal transport of a defective electrode plate occurs based on the corresponding image. Furthermore, if the number of images determined to be abnormal transport of a defective electrode plate among a plurality of images exceeds a predetermined threshold (e.g., 10 % of the total number of image frames or a different percentage), the abnormal transport detector 510 may determine that a defective electrode plate is abnormally transported by considering the possibility that noise is included in the images. The threshold may be a set proportion of the number of images. In addition, the abnormal transport detector 510 may generate, for example, guidance information associated with detection of abnormal transport of a defective electrode plate.

In one or more embodiments, if abnormal transport of a defective electrode plate is detected in at least some of the images, the abnormal transport detector 510 may store the corresponding images in a memory or recording storage device (for example, the video recording device 440 in FIG. 4). Furthermore, if abnormal transport of a defective electrode plate is detected in at least some of the images, the abnormal transport detector 510 may store a time at which the corresponding image is captured (that is, a time at which the abnormal transport of the defective electrode plate occurs) in the memory as an index. Accordingly, post-tracking of abnormal transport of a defective electrode plate may be easily accomplished. In addition or alternatively, in one or more embodiments, if abnormal transport of a defective electrode plate is detected in at least some of the images, the abnormal transport detector 510 may output an alert to a user (e.g. so that they may resolve the abnormal transport by transferring the defective electrode plate to the correct location, such as the no good box). In addition or alternatively, in one or more embodiments, if abnormal transport of a defective electrode plate is detected in at least some of the images, the abnormal transport detector 510 may output one or more commands to the manufacturing equipment to resolve the abnormal transport (e.g. one or more commands instructing the manufacturing equipment to pick up, move, or otherwise transport the defective electrode plate to a correct location, such as the no good box). In response to the one or more commands, the manufacturing equipment may move the defective electrode plate (e.g. through one or more actuators, one or more robotic arms, one or more transport belts and/or one or more vacuum transports (such as vacuum transport 120)).

The learning device 520 may train a machine learning model that detects whether a defective electrode plate is abnormally transported. In some embodiments, the learning device 520 may train a machine learning model by an unsupervised learning method using a learning image frame set associated with the normal transport of a defective electrode plate. The unsupervised learning can refer to a method that analyzes an unlabeled data set and learns to divide the patterns or structure of the data within the data set into one or more clusters. The learning image frame set may include a plurality of images associated with the normal transport of a defective electrode plate taken on a path of a secondary battery manufacturing process. Furthermore, the learning image frame set may include a plurality of images associated with the normal transport of a defective electrode plate received through a communication module, a plurality of images associated with the normal transport of a defective electrode plate stored in a memory, and so on. The learning device 520 can train the machine learning model to understand patterns associated with normal transport of a defective electrode plate based on the training image frames without labels. For example, the learning device 520 may use a clustering algorithm such as k-means clustering, an anomaly detection model such as a local outlier factor (LOF), a support vector machine (SVM), or the like, or an unsupervised learning model based on an artificial neural network such as a generative adversarial network (GAN). Additionally, the learning device 520 may use dimensionality reduction algorithms or models such as t-distributed Stochastic Neighbor Embedding (t-SNE), Uniform Manifold Approximation and Projection (UMAP), and reduce the dimensionality of the data within the training image frame set to train the machine learning model to efficiently understand the structure and patterns of the data. Accordingly, the machine learning model may classify or cluster various states or forms of normal transport of a defective electrode plate through the unsupervised learning and generate one or more groups associated with the normal transport of the defective electrode plate. Further, based on the data dimensionality reduction and/or the clustering results for the input image frames, the machine learning model trained in this way can probabilistically predict whether the image frames belong to a cluster associated with normal transport of a defective electrode plate, or other cluster associated with abnormal transport of a defective electrode plate (e.g., outliers).

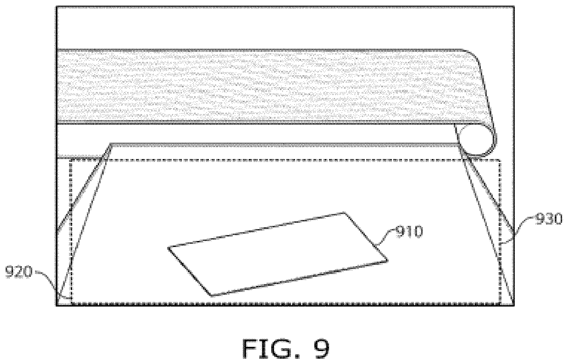

The counter 530 may count the number of defective electrode plates that are normally discharged, based on a plurality of images. For example, the counter 530 may count the number of normally discharged defective electrode plates based on the number of pixels in the digital image corresponding to the defective electrode plate in the region of interest in the images. To this end, the counter 530 may use various pixel counting algorithms that detect objects by counting the number of pixels in an image but is not limited thereto. An example of a method of counting the number of normally discharged defective electrode plates will be described in detail below with reference to FIG. 9.

In one or more embodiments, the counter 530 may generate statistical data associated with the transport of defective electrode plates based on the number of defective electrode plates that are normally discharged. The statistical data associated with the transport of defective electrode plates may include data obtained by comparing the number of defective electrode plates determined by a vision inspector with the number of defective electrode plates normally discharged.

In one or more embodiments, the counter 530 may count the number of defective electrode plates detected to be abnormal transport, based on a plurality of images. For example, whenever the abnormal transport detector 510 detects abnormal transport of a defective electrode plate, the counter 530 may count the number of defective electrode plates detected to be abnormal transport using, for example, a pixel counting algorithm. Furthermore, the counter 530 may determine the type of abnormal transport (e.g., stacking of defective electrode plates in the NG box, abnormal drop of defective electrode plates in the NG box, abnormal position on an out belt, etc.) of a defective electrode plate detected to be abnormal transport. Accordingly, the counter 530 may count the number of defective electrode plates for each type of determined abnormal transport.

In one or more embodiments, the counter 530 may generate statistical data associated with the transport of defective electrode plates based on the number of defective electrode plates for each type of abnormal transport. The statistical data associated with the transport of defective electrode plates may include data representing the number of defective electrode plates detected to be abnormal transport for each type of abnormal transport. Furthermore, statistical data associated with the transport of defective electrode plates may include data obtained by comparing the number of defective electrode plates occurring on a path of another secondary battery manufacturing process with the number of defective electrode plates detected to be abnormal transport.

The internal configuration of the processor 454 in FIG. 5 is only an example, and in some embodiments, the processor 454 may additionally include configurations other than the illustrated internal configuration, some configurations thereof may also be omitted and some processes thereof may be performed by other configurations or an external system. For example, the processor 454 may further include an output unit that outputs guidance information indicating that abnormal transport of a defective electrode plate is detected or outputs statistical data associated with the transport of defective electrode plates. Furthermore, although internal configurations of the processor 454 are described separately for each function in FIG. 5, this does not necessarily mean that the internal configurations are physically divided.

As described above, by learning a machine learning model by an unsupervised learning method using data associated with the normal transport of defective electrode plates of large quantities, the machine learning model may easily be trained while ensuring high performance of the machine learning model. Furthermore, through statistical data associated with the transport of defective electrode plates, abnormally transported defective electrode plates may be effectively tracked, and the cause of abnormal transport may be analyzed.

FIG. 6 illustrates a machine learning model 620 according to one or more embodiments of the present disclosure. The machine learning model 620 may have problem-solving capability by being trained to reduce an error between a correct output corresponding to a specific input and an inferred output as nodes which are artificial neurons forming a network through a combination of synapses as in a biological neural network repeatedly adjust weights of the synapses. For example, the machine learning model 620 may include any probability model or neural network model used for an artificial intelligence learning method of machine learning, deep learning, or so on, such as convolutional neural network (CNN) or recurrent neural network (RNN).

According to one or more embodiments, the machine learning model 620 may receive an image 610 associated with the transport of a defective electrode plate from one or more cameras and may output whether the defective electrode plate included in the image is abnormally transported (630). The machine learning model 620 may be trained by an unsupervised learning method using a learning image frame set associated with the normal transport of a defective electrode plate captured on a path of a secondary battery manufacturing process. Furthermore, the machine learning model 620 may be trained to output whether the input image 610 is included in a group associated with normal transport of a defective electrode plate generated or clustered based on the learning image frame set.

In one or more embodiments, the machine learning model 620 may be implemented by a multilayer perceptron (MLP) including multilayer nodes and connections therebetween. In other embodiments, the machine learning model 620 may also be implemented using one of various machine learning model structures, including MLP. Referring to FIG. 6, the machine learning model 620 may include an input layer 622 that receives an input signal or the image 610 from the outside, an output layer 626 that outputs an output signal corresponding to input data or whether there is abnormal transport (630), n (where n is a positive integer) hidden layers 624_1 to 624_n that are provided between the input layer 622 and the output layer 626, receive a signal from the input layer 622, extract properties, and transmit the properties to the output layer 626. Herein, the output layer 626 receives signals from the hidden layers 624_1 to 624_n and outputs the signals to the outside.

A learning method for the machine learning model may include a supervised learning method of performing learning to optimize problem solving by receiving a teacher signal (answer, such as labelled training data), and an unsupervised learning method that does not require the teacher signal. In the present embodiment, an information processing system (e.g., the information processing system 450 in FIG. 4) may train the machine learning model 620 by the unsupervised learning method to determine whether a defective electrode plate is abnormally transported (630), based on the input image 610. The machine learning model 620 trained in this way may be stored in a memory (not illustrated) of an information processing system (e.g., memory 452 in FIG. 4) and may determine whether a defective electrode plate included in the image 610 is abnormally transported (630) from a communication module and/or memory.

According to one or more embodiments, the information processing system may directly generate learning data (otherwise known as a learning image frame set, training data or a training image frame set) for learning the machine learning model 620 through data of an actual manufacturing process. For example, the information processing system may generate learning data using images associated with the normal transport of a defective electrode plate captured by one or more cameras on a path of a secondary battery manufacturing process. In that case, the images associated with the normal transport of a defective electrode plate are normal data and may be more numerous than the data associated with abnormal transport of a defective electrode plate. The information processing system may then train the machine learning model 620 for determining whether the defective electrode plate is abnormally transported, based on the learning data. Accordingly, the machine learning model 620 may cluster the normal transport data of a defective electrode plate and generate a group associated with the normal transport.

According to one or more embodiments, an input variable of the machine learning model 620 may include raw data of a plurality of images 610 captured by one or more cameras or an embedding vector that has been extracted from the raw data (e.g. embedded raw data, or embedded images). In that case, the images 610 may be captured at all times, regardless of the time when a situation of abnormal transport of a defective electrode plate occurs. In this way, if the input variable described above is input through the input layer 622, an output variable output from the output layer 626 of the machine learning model 620 may include an output signal associated with whether a defective electrode plate is abnormally transported (630). For example, if the input variable is not included in a group associated with normal data, the machine learning model 620 may output an output signal associated with abnormal transport or abnormal transport probability of a defective electrode plate.

In this way, a plurality of input variables and a plurality of output variables corresponding to the input variables may respectively match the input layer 622 and the output layer 626 of the machine learning model 620, and the input layer 622 may be trained such that a correct output corresponding to a specific input may be extracted, by adjusting synapse values between nodes included in the hidden layers 624_1 to 624_n and the output layer 626. Through such a learning process, properties hidden in the input variables of the machine learning model 620 may be identified, and the synapse values (or weights) between nodes of the machine learning model 620 may be adjusted to reduce an error between an output variable calculated based on the input variable and a target output. Using the machine learning model 620 trained in this way, whether a defective electrode plate included in the received image 610 is abnormally transported (630) or a probability of abnormal transport may be output.

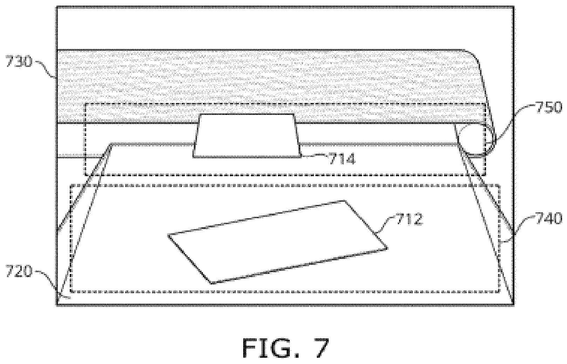

FIG. 7 illustrates an example in which regions of interest 740 and 750 are set in an image, according to one or more embodiments of the present disclosure. In some embodiments, an information processing system (e.g., the information processing system 450 in FIG. 4) may set at least one region of interest 740 and 750 to detect abnormal transport of defective electrode plates 712 and 714 from images captured by one or more cameras. A region of interest may be a select region within a frame or image (e.g. a subset of the pixels). A region of interest may be smaller than the whole frame. Different regions of interest may be set for different sets of images taken from different cameras (e.g. images of different views). For example, the information processing system may set the first region of interest 740 to detect stacking of the defective electrode plate 712 in an NG box 720. The first region of interest 740 may include a region where defective electrode plates are mainly stacked on an inclined surface of the NG box 720. In another example, the information processing system may set the second region of interest 750 to detect an abnormal position of the defective electrode plate 714 in the NG box 720. The second region of interest 750 may include an end of the NG box 720 and at least a partial region of a belt 730. In this way, by setting at least one region of interest, unnecessary noise may be removed from an image received from a camera, and the speed of detecting abnormal transport of a defective electrode plate may be increased.

Although FIG. 7 illustrates two regions of interest, the present disclosure is not limited thereto, and various regions of interest may be set according to an image capturing position, angle, etc. Furthermore, although FIG. 7 illustrates that two regions of interest are separated from each other, the present disclosure is not limited thereto, and some regions may also overlap each other.

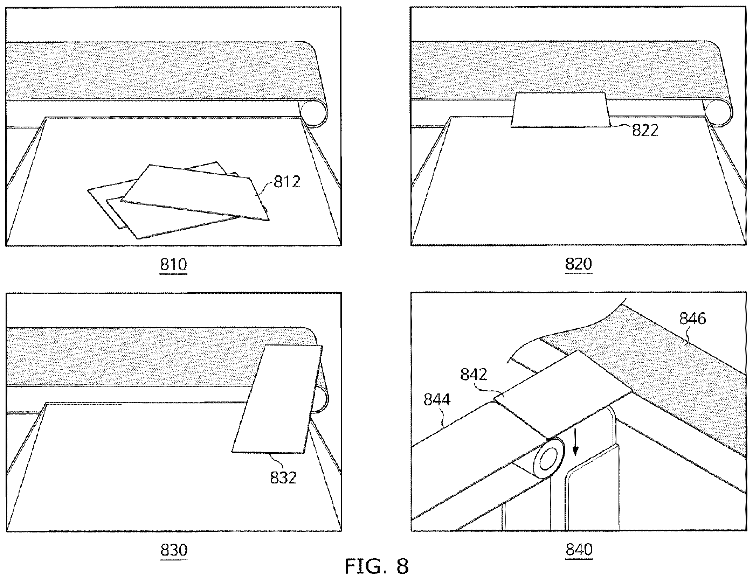

FIG. 8 illustrates four examples of abnormal transport of detected electrode plates, according to one or more embodiments of the present disclosure. In some embodiments, an information processing system (e.g., the information processing system 450 in FIG. 4) may detect various defective electrode plates or abnormal transport of the normal electrode plates from received images.

Referring to a first example 810, the information processing system may detect abnormal transport of a defective electrode plate 812 by detecting the defective electrode plate 812 stacked in the NG box. Referring to a second example 820, the information processing system may detect abnormal transport of a defective electrode plate 822 by detecting abnormal drop of the defective electrode plate 822 by a vacuum transport (e.g. a drop outside of the NG box). Referring to a third example 830, the information processing system may detect abnormal transport of a defective electrode plate 832 by detecting an abnormal position of the defective electrode plate 832 in the NG box, such as hanging over the end of a belt. Referring to a fourth example 840, the information processing system may detect abnormal transport of a normal electrode plate 842 by detecting the normal electrode plate 842 between a distribution belt 846 and an out belt 844 without being dropped from the out belt 844.

Although FIG. 8 illustrates examples of abnormal transport of defective electrode plates or a normal electrode plate, the present disclosure is not limited thereto, and an abnormal transport state that is different from a normal transport of various defective electrode plates or a normal electrode plate may be detected according to various image capturing positions and angles.

FIG. 9 illustrates a view showing an example of a method of counting defective electrode plates 910, according to embodiments of the present disclosure. In one or more embodiments, an information processing system (e.g., the information processing system 450 in FIG. 4) may count the number of defective electrode plates 910 that are normally discharged, based on a plurality of images. For example, a region of interest 930 may be set within the NG box 920 included in a plurality of images. If the defective electrode plate 910 is normally discharged to the NG box 920, the defective electrode plate 910 may appear in the region of interest 930. Also, the information processing system may calculate the number of pixels having color values corresponding to the defective electrode plate 910 in the region of interest 930. Furthermore, the information processing system may determine whether the defective electrode plate 910 is normally discharged through an outlet of the NG box 920 based on the number of pixels corresponding to the defective electrode plate 910 detected on consecutive image frames.

For example, if the defective electrode plate 910 is dropped into the NG box 920, the number of pixels corresponding to the defective electrode plate 910 in the region of interest 930 may increase. Furthermore, if the defective electrode plate 910 is normally discharged along a slope of the NG box 920, the number of pixels corresponding to the defective electrode plate 910 in the region of interest 930 may decrease and then disappear. Accordingly, the information processing system may determine whether the defective electrode plate 910 is normally discharged through the outlet of the NG box 920.

In one or more embodiments, the information processing system may generate statistical data associated with the transport of defective electrode plates based on the number of defective electrode plates normally discharged. The statistical data associated with the transport of defective electrode plates may include data obtained by comparing the number of defective electrode plates determined by a vision inspector (e.g. by a user that manually counts the number of defective electrode plates or a computing system that automatically counts the number of defective electrode plates) with the number of defective electrode plates that are normally discharged. Accordingly, it may be seen that defective electrode plates corresponding to a difference between the number of defective electrode plates determined by the vision inspector and the number of defective electrode plates that are normally discharged are abnormally discharged.

In one or more embodiments, the information processing system may count the number of defective electrode plates detected to be abnormally transported, based on a plurality of images. For example, each time abnormal transport of a defective electrode plate is detected, the information processing system may count the number of defective electrode plates detected to be abnormally transported using a pixel counting or other algorithm. Furthermore, the information processing system may determine the type of abnormal transport (e.g., stacking of defective electrode plates in an NG box, abnormal drop of the defective electrode plate in the NG box, abnormal position on the out belt, etc.) of a defective electrode plate detected to be abnormally transported. Accordingly, the information processing system may count the number of defective electrode plates for each type of determined abnormal transport.

In one or more embodiments, the information processing system may generate statistical data associated with the transport of defective electrode plates based on the number of defective electrode plates for each type of abnormal transport. The statistical data associated with the transport of defective electrode plates may include data (for example, a graph) representing the number of defective electrode plates detected to be abnormal transport for each type of abnormal transport. Furthermore, the statistical data associated with the transport of defective electrode plates may include data obtained by comparing the number of defective electrode plates occurring on a path of another secondary battery assembly process with the number of defective electrode plates detected to be abnormal transport. Accordingly, it may be possible to detect equipment in which abnormal transport of defective electrode plates mainly occurs.

The method of detecting a defective electrode plate from an image as illustrated in FIG. 9 is only an example, and the present disclosure is not limited thereto, and various algorithms for detecting objects from an image may be used.

As described above, by generating statistical data by counting the number of defective electrode plates that are normally discharged and the number of defective electrode plates that are abnormally transported, the cause of abnormal transport of defective electrode plates may be effectively analyzed. Accordingly, a method of reducing abnormal transport of defective electrode plates may be derived, and as a result, productivity of secondary batteries may be increased.

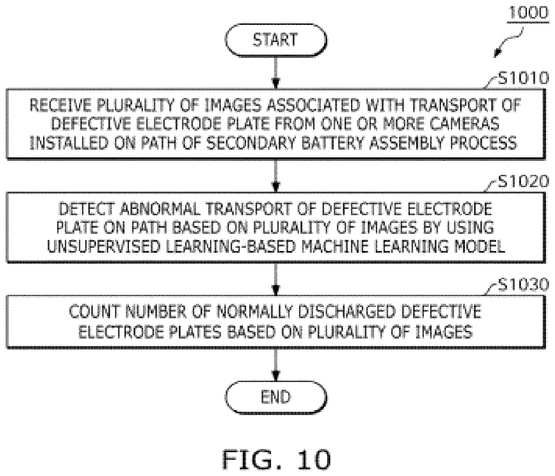

FIG. 10 illustrates a flowchart showing an example of a method 1000 of detecting abnormal transport of a defective electrode plate, according to one or more embodiments of the present disclosure. In some embodiments, the method 1000 may be performed by at least one processor. The method 1000 may start by receiving, by a processor, a plurality of images associated with the transport of a defective electrode plate from one or more cameras installed on a path of a secondary battery assembly process (S1010). The one or more cameras may be installed adjacent to at least one of an NG box or an out belt on the path. The one or more cameras may be configured to capture one or more images of the path of the secondary battery assembly process S1010. In such a case, the one or more cameras may be connected to a POE hub, and the POE hub may be connected to at least one of an equipment control device associated with a secondary battery assembly process, a video recording device and a computing device associated with a machine learning model.

Thereafter, the processor may detect abnormal transport of a defective electrode plate on a path based on a plurality of images using an unsupervised learning-based machine learning model (S1020). For example, the processor may determine abnormal transport of a defective electrode plate for each of a plurality of images using a machine learning model. Also, if the number of images determined to be abnormal transport of a defective electrode plate among the images exceeds a predetermined threshold, the processor may determine that the defective electrode plate is abnormally transported. For example, based on the images, the processor may detect at least one of stacking of defective electrode plates in an NG box, abnormal drop of a defective electrode plate in the NG box, an abnormal position of a defective electrode plate in the NG box and an abnormal position on an out belt.

Thereafter, the processor may count the number of defective electrode plates that are normally discharged based on the images (S1030). For example, the processor may count the number of defective electrode plates that are normally discharged based on the number of image pixels corresponding to a defective electrode plate in regions of interest of the images. Furthermore, the processor may generate statistical data associated with the transport of defective electrode plates based on the number of defective electrode plates that are normally discharged. The statistical data associated with the transport of defective electrode plates may include data obtained by comparing the number of defective electrode plates determined by a vision inspector with the number of defective electrode plates that are normally discharged.

In one or more embodiments, a machine learning model may be trained by an unsupervised learning method using a learning image frame set associated with normal transport of defective electrode plates captured on a path of a secondary battery assembly process. Furthermore, the machine learning model may be trained to receive an image and output whether the image is included in a group generated based on the learning image frame set.

In one or more embodiments, the processor may count the number of defective electrode plates detected to be abnormal transport based on the images. For example, the processor may determine the type of abnormal transport of a defective electrode plate detected to be abnormal transport. Furthermore, the processor may count the number of defective electrode plates for each type of the determined abnormal transport. In addition, the processor may generate statistical data associated with the transport of defective electrode plates based on the number of defective electrode plates for each type of abnormal transport. The statistical data associated with the transport of defective electrode plates may include data obtained by comparing the number of defective electrode plates occurring on a path of another secondary battery assembly process with the number of defective electrode plates detected to be abnormal transport.

The above-described method may be provided as a computer program stored in a non-transitory computer-readable recording medium to be executed by a computer. Media may continuously store executable programs on a computer or may temporarily store the executable programs for execution or download. Furthermore, the media may be a variety of recording or storage devices in the form of a combination of a single or several pieces of hardware, and is not limited to a media directly connected to a computer system and may be distributed over a network. Media may include, for example, magnetic media such as hard disks, floppy disks, or magnetic tapes, optical recording media such as CD-ROMs or DVDs, magneto-optical media such as floptical disks, ROM, RAM, flash memory, and so on, and may be configured to store program instructions.

The methods, operations, or techniques of the present disclosure may also be implemented by various embodiments. For example, the techniques may also be implemented by hardware, firmware, software, or a combination thereof. Those of ordinary skill in the art will understand that the various illustrative logical blocks, modules, circuits, and algorithm steps described in connection with the present disclosure may be implemented by electronic hardware, computer software, or combinations of both. To clearly describe the interchange of hardware and software, various illustrative components, blocks, modules, circuits, and steps are described above generally in terms of function. Whether such function is implemented by hardware or software depends on specific application and design requirements provided on the overall system. Those of ordinary skill in the art may implement the functions described in various ways for each particular application, but such implementations should not be interpreted to be departed from the scope of the present disclosure.

In some hardware implementations, the processing units used to perform techniques may also be implemented within one or more ASICs, DSPs, graphics processing units (GPUs), digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computers, or combinations thereof.

Accordingly, the various illustrative logical blocks, modules and circuits described in connection with the present disclosure may be implemented or performed by general-purpose processors, DSPs, ASICs, FPGAs or other programmable logic devices, discrete gates or transistor logics, discrete hardware components, or any combination of components designed to perform the functions described in the present disclosure. A general-purpose processor may be a microprocessor, but in the alternative, the processor may also be any known processor, controller, microcontroller, or state machine. A processor may also be implemented by a combination of computing devices, for example, a combination of a DSP and a microprocessor, a combination of a plurality of microprocessors, a combination of a DSP core and one or more microprocessors, or a combination of other configurations.

In implementing firmware and/or software, techniques may also be implemented by instructions stored in a non-transitory computer-readable medium, such as RAM, ROM, NVRAM, PROM, EPROM, EEPROM, flash memory, a CD, or a magnetic or optical data storage device. Instructions may also be executable by one or more processors and may cause a processor (or processors) to perform certain aspects of the functions described in the present disclosure.

When implemented in software, the techniques may also be stored in or transmitted through a non-transitory computer-readable medium as one or more instructions or codes. Computer-readable media may include both computer storage media and communication media, in addition to any medium that facilitates transfer of a computer program from one place to another place. Storage media may also be any available media that may be accessed by a computer. By way of non-limiting examples, such computer-readable media may include RAM, ROM, EEPROM, CD-ROM or another optical disk storage, a magnetic disk storage or other magnetic storage devices, or any other medium that may be used to transfer or store the desired program codes in the form of instructions or data structures and may be accessed by a computer. Also, any connection may suitably be made by a non-transitory computer-readable medium.

A software module may also be included in RAM, flash memory, ROM, EPROM, EEPROM, registers, a hard disk, a portable disk, CD-ROM, or a storage medium of any other known form. An example storage medium may be connected to a processor such that the processor may read information from or write information to the storage medium. Alternatively, the storage medium may be integrated into the processor. The processor and storage medium may also be included in an ASIC. The ASIC may also be included in a user terminal. Alternatively, the processor and storage medium may also be included in the user terminal as separate components.

Although the above-described embodiments are described as utilizing aspects of the presently disclosed subject matter in one or more standalone computer systems, the present disclosure is not limited thereto and may also be implemented in conjunction with any computing environment, such as a network or distributed computing environment. Furthermore, aspects of the subject matter of the present disclosure may also be implemented in multiple processing chips or devices, and storages may also be similarly affected by multiple devices. Such devices may include personal computers (PCs), network servers, and portable devices.

Although the present disclosure has been described above with respect to embodiments thereof, the present disclosure is not limited thereto. Various modifications and variations can be made thereto by those skilled in the art within the scope of the appended claims.

## Claims

1. A method of detecting abnormal transport of a defective electrode plate, which is performed by at least one processor, the method comprising:
receiving a plurality of images associated with transport of a defective electrode plate (330) from one or more cameras (310) installed on a path of a secondary battery assembly process; and
detecting abnormal transport of the defective electrode plate (330) on the path based on the images using a machine learning model based on unsupervised learning.

2. The method as claimed in claim 1, wherein the one or more cameras (310) are installed at a position adjacent to at least one of a no good box (350) and an out belt (844) on the path.

3. The method as claimed in claim 2, wherein the detecting of abnormal transport of the defective electrode plate (330) on the path includes:
detecting at least one of stacking of the defective electrode plate (330) in the no good box (350), abnormal drop of the defective electrode plate (330) in the no good box (360), an abnormal position of the defective electrode plate (330) in the no good box (360) and an abnormal position in the out belt (844), based on the plurality of images.

4. The method as claimed in any preceding claim, wherein the machine learning model is trained by an unsupervised learning method using a learning image frame set associated with normal transport of the defective electrode plate (330) captured on the path of the secondary battery assembly process.

5. The method as claimed in claim 4, wherein the machine learning model is trained to receive an image and to output whether the image is included in a group generated based on the learning image frame set.

6. The method as claimed in any preceding claim, wherein the detecting of the abnormal transport of the defective electrode plate (330) on the path includes:
determining abnormal transport of the defective electrode plate (330) for each of the images using the machine learning model; and
determining that the defective electrode plate is abnormally transported if a number of images determined to be abnormal transport of the defective electrode plate among the images exceeds a predetermined threshold.

7. The method as claimed in any preceding claim, further comprising:
counting a number of normally discharged defective electrode plates (330) based on the images.

8. The method as claimed in claim 7, wherein
the counting of the number of normally discharged defective electrode plates (330) includes counting the number of normally discharged defective electrode plates (330) based on a number of image pixels corresponding to a defective electrode plate (330) in regions of interest of the images.

9. The method as claimed in claim 7 or claim 8, further comprising:
generating statistical data associated with transport of the defective electrode plate (330) based on the number of normally discharged defective electrode plates (330).

10. The method as claimed in claim 9, wherein the statistical data associated with the transport of the defective electrode plate (330) includes data obtained by comparing a number of defective electrode plates (330) determined by a vision inspector with the number of normally discharged defective electrode plates (330).

11. The method as claimed in any preceding claim, further comprising:
counting a number of defective electrode plates (330) detected to be abnormal transport based on the images.

12. The method as claimed in claim 11, wherein the counting of the number of defective electrode plates (330) detected to be abnormal transport includes:
determining a type of abnormal transport of the defective electrode plate (330) detected to be abnormal transport; and
counting the number of defective electrode plates (330) for each type of the determined abnormal transport.

13. The method as claimed in claim 12, further comprising:
generating statistical data associated with transport of the defective electrode plates (330), based on the number of defective electrode plates (330) for each type of abnormal transport.

14. The method as claimed in claim 13, wherein the statistical data associated with the transport of the defective electrode plates (330) includes data obtained by comparing a number of defective electrode plates occurring on a path of another secondary battery assembly process with the number of defective electrode plates (330) detected to be abnormal transport.

15. A system for detecting abnormal transport of a defective electrode plate, the system comprising:
one or more cameras configured to capture a plurality of images associated with transport of the defective electrode plate on a path of a secondary battery assembly process; and
a detection module configured to detect abnormal transport of the defective electrode plate on the path based on the images using a machine learning model based on unsupervised learning.
